(19) Europäisches Patentamt / European Patent Office / Office européen des brevets

(11) **EP 0 675 652 B1**

(12) **FASCICULE DE BREVET EUROPEEN**

(45) Date de publication et mention
de la délivrance du brevet:
**13.05.2009 Bulletin 2009/20**

(51) Int Cl.:
*H04N 7/24* $^{(2006.01)}$        *H04N 5/14* $^{(2006.01)}$

(21) Numéro de dépôt: **95200686.4**

(22) Date de dépôt: **21.03.1995**

(54) **Procédé et circuit d'estimation de mouvement entre images à deux trames entrelacées, et dispositif de codage de signaux numériques comprenant un tel circuit**

Verfahren und Schaltung zur Bewegungsschätzung zwischen Bildern mit zwei Zeilensprunghalbbildern, und Vorrichtung zur digitalen Signalkodierung mit einer solchen Schaltung

Method and circuit for estimating motion between images of two interlaced fields, and digital signal coding devices comprising such a circuit

(84) Etats contractants désignés:
**DE FR GB IT**

(30) Priorité: **21.09.1994 FR 9411284**
**30.03.1994 FR 9403772**

(43) Date de publication de la demande:
**04.10.1995 Bulletin 1995/40**

(73) Titulaire: **NXP B.V.**
**5656 AG Eindhoven (NL)**

(72) Inventeur: **Tranchard, Lionel**
**F-75008 Paris (FR)**

(74) Mandataire: **van der Veer, Johannis Leendert et al**
**NXP Semiconductors B.V.**
**IP&L Department**
**High Tech Campus 32**
**5656 AE Eindhoven (NL)**

(56) Documents cités:
EP-A- 0 484 140          EP-A- 0 536 784
EP-A- 0 541 389          EP-A- 0 544 122
EP-A- 0 560 577          EP-A- 0 573 665
EP-A- 0 577 365          EP-A- 0 579 844
WO-A-93/03578          US-A- 5 093 720

- **INTERNATIONAL ORGANISATION FOR STANDARDIZATION - ISO/IEC JTC1/SC2/WG11, page 1 MATSUSHITA ''MPEG Document 91/217''**
- **SIGNAL PROCESSING. IMAGE COMMUNICATION, vol. 5, AMSTERDAM NL, page 39 A.PURI ET AL. 'Adaptive frame/field motion compensated video coding'**

**Description**

La présente invention concerne un procédé d'estimation de mouvement entre images à deux trames entrelacées.

L'invention concerne également un circuit d'estimation de mouvement entre image à deux trames entrelacées.

L'invention concerne enfin un dispositif de codage comprenant un tel circuit d'estimation de mouvement.

Cette invention trouve des applications très importantes dans le domaine de la compression de données numériques, avant la transmission et/ou le stockage de celles-ci, et tout particulièrement pour la réalisation d'un dispositif de codage de signaux de télévision numériques compatible avec le standard MPEG-2.

On sait que la transmission sous forme numérique d'une image de télévision à la définition actuelle exige (et exigerait encore plus à une définition plus élevée) des débits nécessitant des canaux à très large bande (par exemple, une séquence d'images en couleurs défilant à raison de 25 images par seconde engendre un flot de données numériques d'un peu plus de 165 millions de bits par seconde). La transmission directe d'une telle quantité d'informations n'est pas réalisable économiquement, et, pour que ces informations puissent emprunter les réseaux de transmission de données et supports de stockage actuels, on réalise une compression du nombre des données. Cette compression est obtenue essentiellement en tirant parti de la forte corrélation spatiale et temporelle entre points d'image (ou pixels) voisins, comme on le rappellera plus loin de façon plus détaillée.

Il est utile, auparavant, de rappeler les caractéristiques principales du standard MPEG-2. Une séquence de signaux numériques conforme à ce standard comprend des informations relatives à la composante de luminance $Y$ et aux composantes de la chrominance, ou signaux de différence de couleur $U$ et $V$ (les niveaux de gris, pour la luminance $Y$, et les niveaux de couleur, pour les signaux $U$ et $V$, étant exprimés par des mots numériques de 8 bits). Selon le format d'entrée prévu dans le standard MPEG, la chrominance subit un sous-échantillonnage par quatre, par rapport à la luminance. De ce fait, on dispose de deux valeurs liées à la couleur (l'une pour $U$, l'autre pour $V$) pour quatre valeurs de luminance. Comme les matrices de mots de 8 bits sont agencées en blocs de 8 x 8 points d'image, quatre blocs adjacents de la matrice $Y$ correspondent à un bloc de la matrice $U$ et à un bloc de la matrice $V$, et ces six blocs, réunis, constituent un macrobloc (ces blocs et macroblocs sont les unités de subdivision d'image sur lesquelles est effectué le codage, dans l'exemple d'application cité plus haut). Enfin, le regroupement d'une série de macroblocs constitue une tranche, et chaque image est composée d'un certain nombre de tranches, par exemple 36 dans l'exemple ici décrit.

Les images (on appelle ainsi, de manière concise, l'ensemble des signaux numériques leur correspondant) sont elles-mêmes, dans un flot de données MPEG, de trois types, suivant le mode de codage qui leur est appliqué. Les plus simples sont les images I (de l'anglais "Intra frame coded picture"), ou images intra, dans lesquelles tous les macroblocs sont codés indépendamment de toute autre image. Ainsi, en cas de modification du canal de transmission, ou de commutation de débit, on convient d'attendre une telle image de type I pour reconstituer au décodage les nouvelles informations résultant de ladite modification. Les images P (de l'anglais "Predictive coded picture") constituent un deuxième type d'images, prédites par compensation de mouvement unidirectionnelle à partir d'une image précédente (de type I ou de type P elle-même) et qui ne peuvent donc contenir que des macroblocs de type P ou de type I. Enfin, les images B (de l'anglais "Bidirectionally predictive coded picture"), prédites par compensation de mouvement bidirectionnelle à partir d'une image antérieure et d'une image postérieure (elles-mêmes de type I et/ou P), peuvent contenir des macroblocs de type I, P ou B indifféremment.

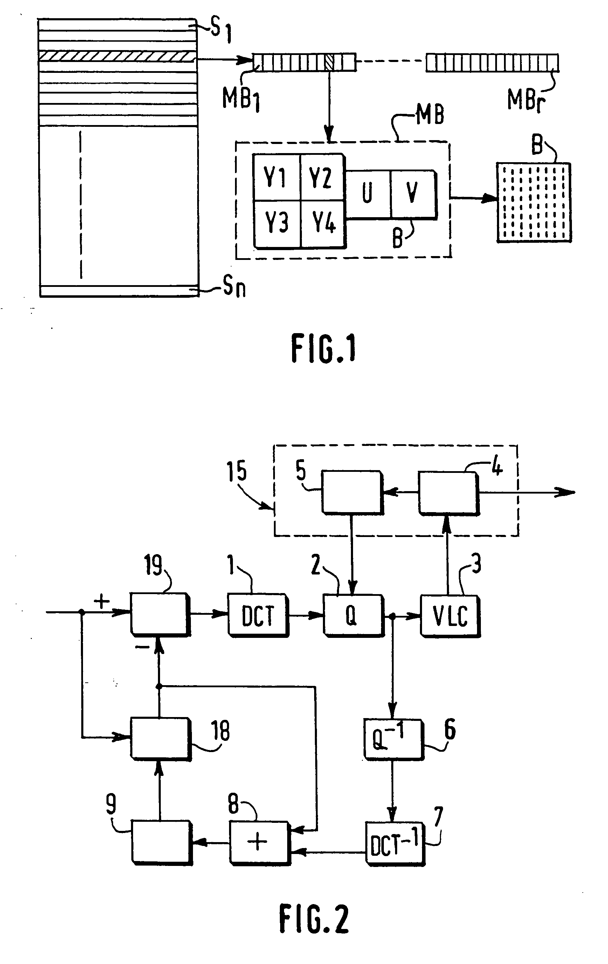

Un flot de données comprend, en définitive, six niveaux d'informations (chaque niveau englobant le niveau inférieur et quelques informations additionnelles). Au niveau le plus élevé correspond la séquence d'images. Cette séquence est composée d'une succession de groupes d'images (ou GOP, de l'anglais Group Of Pictures) comprenant eux-mêmes chacun un nombre déterminé d'images. Une image, telle que représentée sur la figure 1, inclut elle-même un nombre déterminé n de tranches d'image $S_1$ à $S_n$, chaque tranche d'image inclut un certain nombre r de macroblocs $MB_1$ à $MB_r$, et chaque macrobloc MB comprend un certain nombre de blocs B, ici 6 ($Y_1$, $Y_2$, $Y_3$, $Y_4$, $U$, $V$), qui constituent le dernier niveau.

Ces rappels relatifs au standard MPEG étant effectués, on aborde maintenant, avant la description de l'invention, celle d'un exemple de dispositif de codage selon l'état de la technique. Un tel dispositif, représenté sur la figure 2, comprend tout d'abord une voie de codage, comprenant elle-même en série un circuit de transformation orthogonale (ici un circuit 1 de transformation cosinus discrète, dite DCT), un circuit de quantification 2, et un circuit 3 de codage à longueur variable (dit codage VLC). Le circuit 1 de transformation DCT reçoit, par l'intermédiaire d'un soustracteur 19 mentionné plus loin, des signaux numériques correspondant aux signaux vidéo d'entrée du dispositif de codage (obtenus, plus précisément, par différence entre ces signaux d'entrée et des signaux prédits présents sur l'autre entrée du soustracteur) et disponibles sous forme de blocs ici de format 8 x 8 points d'image. Ce circuit 1 convertit ces blocs de signaux en blocs de 8 x 8 coefficients, dont le premier représente la valeur moyenne des niveaux de gris des points d'image du bloc considéré et dont les soixante-trois autres représentent les différentes fréquences spatiales présentes dans ce bloc.

Le circuit de quantification 2 assure alors la quantification de chacun de ces coefficients de sortie du circuit 1. Cette quantification est liée d'une part à la position du coefficient considéré dans le bloc 8 x 8 (les hautes fréquences spatiales sont moins perceptibles par l'oeil humain et la quantification des coefficients correspondants peut donc être effectuée avec un pas de quantification plus grand donnant une quantification moins précise) et d'autre part à un facteur de quantification lié au débit. Les valeurs issues de cette quantification sont alors fournies au circuit 3 de codage à longueur variable, en sortie duquel est prévue, dans un étage 15 de régulation de débit, une mémoire-tampon 4 de stockage des mots codés, dont la sortie constitue celle du dispositif de codage. En fonction du remplissage de cette mémoire 4, un circuit de régulation de débit 5 prévu en sortie de ladite mémoire renvoie vers le circuit de quantification 2 le facteur de quantification mentionné plus haut et dont la valeur, liée à ce remplissage, permet une modification du pas de quantification de façon que ladite mémoire 4 ne déborde ni ne se vide. Une telle chaîne de codage avec régulation du débit est connue et ne sera donc pas décrite davantage ici.

Les valeurs issues de la quantification sont également fournies à une voie de prédiction comprenant elle-même en série un circuit 6 de quantification inverse (notée $Q^{-1}$), un circuit de transformation orthogonale inverse (ici un circuit 7 de transformation cosinus discrète inverse, notée $DCT^{-1}$), un additionneur 8, une mémoire d'image 9, un circuit 18 d'estimation et de compensation de mouvement à partir de l'image d'origine et de l'image non compensée stockée dans ladite mémoire, et un soustracteur 19 effectuant la différence entre les signaux d'entrée et les signaux prédits disponibles en sortie du circuit 18 (ces signaux prédits étant également envoyés vers une deuxième entrée de l'additionneur 8), pour n'envoyer vers la voie de codage et ne traiter dans celle-ci que la différence entre ces signaux, compte tenu du mouvement intervenu entre l'image prédite (à partir de l'image précédente) et l'image d'entrée (ou image courante).

La prédiction des images de type P ou B est effectuée en estimant le ou les déplacements qui sont intervenus à l'intérieur de ces images par rapport à la ou aux images de comparaison à l'aide de vecteurs de mouvement qui sont également transmis dans le flot de données (le plus souvent, de manière différentielle par rapport à un vecteur de mouvement déjà transmis). Cette estimation de mouvement, effectuée à partir des informations de luminance, consiste à projeter le bloc (ou macrobloc) courant, pour lequel on doit évaluer le mouvement, dans la ou les images de comparaison, et, là, à le comparer avec tous les blocs (macroblocs) possibles se trouvant à l'intérieur d'une fenêtre de recherche qui délimite les possibilités maximales de l'estimateur de mouvement. Le bloc (macrobloc) estimé dans l'image courante est celui de la ou des images de comparaison qui, dans un certain voisinage, est le plus semblable par corrélation, la meilleure correspondance possible étant en général définie selon un critère de distorsion minimale, tel que, par exemple, la recherche de l'obtention de la plus faible somme possible des différences entre les luminances des points d'image des deux blocs, ou macroblocs (critère dit MAE, de l'anglais "Mean Absolute Error", ou erreur absolue moyenne).

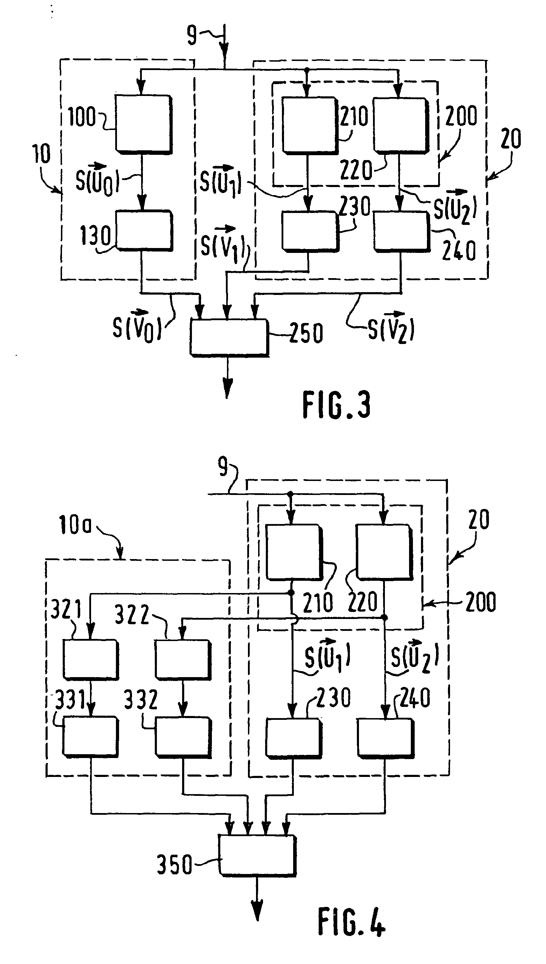

Divers documents, tels que par exemple la demande de brevet EP-0560577 ou l'article "Adaptive frame/field motion compensated video coding", de A. Puri, R. Aravind et B. Haskell, paru dans la revue "Signal Processing", vol.5, nos 1-2, février 1993, pp.39-58, publiée par l'Association Européenne pour le Traitement du Signal (EURASIP), décrivent les principes d'une telle estimation de mouvement, et de la compensation de mouvement effectuée aussi au décodage à partir des vecteurs de mouvement ainsi déterminés, puis transmis et/ou stockés. Comme indiqué dans ces documents, on exploite la présence, dans les blocs (ou macroblocs) considérés, de lignes provenant des deux trames d'une image de télévision, et l'on définit deux modes d'estimation de mouvement : un mode image et un mode trame, ce qui conduit à une réalisation de circuit d'estimation de mouvement telle que celle de la figure 3.

Sur cette figure, l'estimation de mouvement est réalisée dans deux voies, une voie 10 de recherche du meilleur vecteur image et une voie 20 de recherche des meilleurs vecteurs trame possibles. Dans chaque voie, l'estimation de mouvement est réalisée en deux étapes : tout d'abord une recherche du ou des meilleurs vecteurs de mouvement entiers, puis une recherche plus locale d'un vecteur amélioré au demi-point d'image près. Enfin, une comparaison des vecteurs de mouvement ainsi obtenus permet la sélection de l'un d'eux comme le plus représentatif du mouvement du bloc (macrobloc) courant.

Plus précisément, la voie 10 comprend, à cet effet, un étage 100 de recherche du vecteur image. Un tel étage comprend par exemple des mémoires en série et un corrélateur par blocs. Un tel corrélateur, tout à fait classique et décrit par exemple dans le document "Displacement measurement and its application in interframe image coding", de J.R. Jain et A.K. Jain, paru dans "IEEE Transactions on Communications", vol. COM-29, n°12, décembre 1981, pp. 1799-1808, a pour objet de sélectionner un vecteur de mouvement auquel correspond une erreur d'approximation minimale, après une recherche de tous les vecteurs possibles dans la plage de recherche adoptée. Cette recherche de corrélation de blocs est légèrement différente selon que l'image est de type P ou de type B. Dans le cas d'une image de type P, le bloc (macrobloc) estimé est obtenu à partir d'un autre bloc (macrobloc) de l'image de comparaison, compte tenu du mouvement défini par le vecteur image optimal. Dans le cas d'une image de type B, le bloc (macrobloc) estimé est la moyenne des deux blocs (macroblocs) obtenus de façon similaire respectivement à partir d'un bloc (macrobloc) de l'image antérieure et d'un bloc (macrobloc) de l'image postérieure.

L'étage 100 de recherche de vecteur image est suivi d'un circuit 130 de raffinement de recherche au demi-point d'image près, par exemple un filtre d'interpolation spatiale symétrique comme indiqué dans le document cité "Signal Processing", février 1993. Ce raffinement au demi-point d'image près prend en compte, par rapport à la position d'un point d'image résultant de l'estimation avant raffinement, les huit positions voisines au demi-point d'image près qui entourent ce point. Si S désigne la luminance et (x,y) les coordonnées horizontale et verticale dudit point, on aura par

exemple :

$$S(x+0,5 \; ; \; y) = (S(x \; ; \; y) + S(x+1 \; ; \; y))/2 \qquad (1)$$

$$S(x \; ; \; y+0,5) = (S(x \; ; \; y) + S(x \; ; \; y+1))/2 \qquad (2)$$

$$S(x+0,5 \; ; \; y+0,5) = (S(x \; ; \; y) + S(x+1 \; ; \; y)$$
$$+ S(x \; ; \; y+1) + S(x+1 \; ; \; y+1))/4 \qquad (3)$$

On désigne par la référence $\vec{V}_0$ ce vecteur image sélectionné après raffinement de la recherche, et l'on verra ci-après quelle est la nature du signal de sortie du circuit 130.

La voie 20 de recherche des meilleurs vecteurs trame possibles comprend, elle, un étage 200 de recherche de vecteurs trame, composé lui-même de deux sous-étages 210 et 220 de recherche de vecteur trame de structure tout à fait similaire à celle de l'étage 100 (mémoires et corrélateur par bloc, ou macrobloc). Pour cette recherche des meilleurs vecteurs trame, deux recherches de corrélation par bloc sont effectuées, l'une pour le bloc (macrobloc) comprenant les lignes d'une trame de parité déterminée (c'est-à-dire deux fois moins de lignes que dans le cas de l'étage 100), et l'autre pour le bloc (macrobloc) comprenant les lignes de la trame de parité opposée. Pour chaque trame, le bloc (macrobloc) de référence peut être trouvé soit dans la trame paire, soit dans la trame impaire de l'image de référence. Comme dans le cas de la voie 10, les sous-étages 210 et 220 de l'étage 200 sont suivis de circuits 230 et 240 de raffinement de recherche au demi-point d'image près. Ces circuits 230 et 240 sont de structure rigoureusement identique à celle du circuit 130, et l'on désigne par $\vec{V}_1$ et $\vec{V}_2$ les vecteurs trames qu'ils permettent de sélectionner (pour les trames impaire et paire respectivement).

Enfin, un circuit de décision 250, recevant en parallèle les trois sorties des circuits 130, 230, 240 de raffinement de recherche au demi-point d'image près, permet d'opérer le choix entre un codage image ou un codage trame, par exemple en comparant dans ces différents cas, selon le même critère que précédemment (critère de distorsion minimale), les sommes des différences entre luminances des points d'image des blocs (macroblocs) concernés, et en choisissant parmi les trois vecteurs $\vec{V}_0$, $\vec{V}_3$, $\vec{V}_1$ celui peur lequel cette somme est la plus faible, Dans le cas présent, les signaux présents sur lesdites trois sorties des circuits 130, 230, 240 sont donc lesdites sommes correspondant respectivement aux trois vecteurs $\vec{V}_0$, $\vec{V}_1$, $\vec{V}_2$, et on les désigne sur la figure 3 par les références $s(\vec{V}_0)$ $S(\vec{V}_1)$, $S(\vec{V}_2)$ respectivement De façon similaire les sorties de l'étage 100 et des sous-étages 210 et 220 sont désignées respectivement par $s(\vec{U})_0$, $S(\vec{U}_1)$, $S(\vec{U}_2)$, $S(\vec{U}_0)(\vec{U}_1)(\vec{U}_2)$ étant les vecteurs trame et image sélectionnés avant raffinement de la recherche et qui correspondant respectivement à ces sommes.

Cependant, dans le circuit d'estimation de mouvement de la figure 3, les étages 100 et 200 sont les plus coûteux, en raison de leur complexité.

Un premier but de l'intention est de proposer un procédé d'estimation de mouvement similaire à celui dont une mise en oeuvre vient d'être décrite, mais plus simple.

A cet effet l'invention concerne un procédé d'estimation de mouvement tel que défini par la revendication 1.

Le procédé ainsi proposé permet la détermination d'un vecteur de mouvement représentant une approximation satisfaisante de celui qui, par exemple dans les deux premiers documents cités, rend compte, pas bloc d'image, du mouvement entre une image courante et une image précédente de la séquence d'images à coder.

Un autre but de l'invention est de proposer des exemples de circuits pour une mise en oeuvre de tels procédés.

A cet effet l'invention concerne tout d'abord un circuit d'estimation de mouvement tel que défini par la revendication 4.

On a vu que l'invention trouvait des applications importantes dans le domaine de la compression de données numériques. Un autre but de l'invention est de proposer en particulier, dans le cadre de telles applications, un dispositif de codage de signaux de télévision numériques compatible avec le standard MPEG-2.

L'invention concerne à cet effet un dispositif de codage de signaux numériques représentatifs d'une séquence d'images divisées en blocs d'image composés chacun de points d'image, comprenant une première voie dite de codage et une deuxième voie dite de prédiction qui comprend elle-même notamment un stage d'estimation et de compensation de mouvement ainsi qu'un soustracteur inséré entre l'entrée du dispositif de codage et la voie de codage et recevant sur son entrée négative la sortie dudit étage d'estimation et de compensation de mouvement, ledit dispositif de codage étant caractérisé en ce que ledit étage d'estimation et de compensation de mouvement comprend un circuit d'estimation de mouvement tel que ceux décrits ci-dessus.

Les particularités et avantages de l'invention apparaîtront maintenant de façon plus précise dans la description détaillée qui suit et dans les dessins annexés, donnés à titre d'explication de l'état de la technique et d'exemples non limitatifs de réalisation de l'invention, et dans lesquels :

- la figure 1 est une représentation simplifiée d'une image de type MPEG (partie gauche de la figure) subdivisée en n tranches $S_1$ à $S_{n'}$ chacune desdites tranches comprenant elle-même (partie droite de la figure) r macroblocs $MB_1$ à $MB_r$ eux-mêmes constitués chacun de quatre blocs de luminance et de deux blocs de chrominance, et ces blocs comprenant ici 8 x 8 points d'image ;
- la figure 2 montre la structure générale d'un dispositif de codage à longueur variable de type classique ;
- la figure 3 montre un exemple de réalisation, dans un tel dispositif de codage, d'un circuit d'estimation de mouvement selon l'état de la technique ;
- les figures 4 et 5 montrent deux exemples de réalisation d'un circuit d'estimation de mouvement selon l'invention.

Ces deux exemples de réalisation à l'aide de modules électroniques câblés seront tout d'abord décrits. Il faut noter cependant qu'ils ne sont qu'une mise en oeuvre particulière de l'invention et que par exemple une réalisation, incluant notamment un microprocesseur qui assure l'exécution de séries d'instructions correspondant aux fonctions de certains ou de la totalité des étages ou circuits prévus dans lesdits exemples de réalisation est possible et tout à fait conforme à l'invention. La description de ces deux exemples sera donc suivie de celle des étapes du processus d'approximation de vecteur de mouvement qui, à travers ces exemples, est mis en oeuvre d'une manière générale dans le cadre de l'invention.

Cette mise en oeuvre, dans l'exemple de réalisation représenté sur la figure 4, est assurée par un circuit d'estimation de mouvement qui comprend toujours, comme dans la réalisation de la figure 3, la voie 20 de recherche des meilleurs vecteurs trame, dont la structure est inchangée. La voie 10, par contre, est remplacée par une voie 10a de recherche du meilleur vecteur image, dont la structure est la suivante. Cette voie 10a comprend deux branches comprenant elle-mêmes chacune en série un circuit dit d'ajustement temporel éventuel (circuits 321 et 322 respectivement) et un circuit de raffinement de recherche au demi-point d'image près (circuits 331 et 332 respectivement). Dans chacune de ces branches, le circuit d'ajustement temporel reçoit la sortie d'un des sous-étages de recherche de vecteur trame.

Par exemple dans la première branche, deux situations peuvent alors se présenter. Dans la première d'entre elles, le meilleur vecteur trame sélectionné pour la trame impaire (le vecteur $U_1$) a établi une correspondance entre trames impaires (c'est-à-dire de même parité), et c'est alors lui qui reste sélectionné comme meilleur vecteur image éventuel. Le circuit 321 n'effectue dans ce cas aucun traitement. Dans la seconde de ces situations, le meilleur vecteur trame $\vec{U}_1$ a établi en fait une correspondance entre la trame impaire de l'image courante et la trame paire de l'image précédente utilisée pour l'estimation de mouvement (cette fois, les trames sont de parité opposée). Ce décalage temporel d'une demi-période d'image doit être pris en compte, ce qu'effectue le circuit 321 qui, par une règle de trois, réévalue le meilleur vecteur trame $\vec{U}_1$. Cette réévaluation se produit dans le sens d'une augmentation lorsqu'il s'agit comme ici d'une prédiction vers l'avant (en anglais, "forward prediction"), l'image précédente étant utilisée pour la prédiction, ou au contraire se produirait dans le sens d'une diminution s'il s'agissait d'une prédiction vers l'arrière (en anglais, "backward prediction"), la prédiction étant faite cette fois à partir de l'image suivante. Selon la situation considérée, le signal S(.) de sortie du circuit 321 correspond au vecteur $\vec{U}_1$ inchangé ou au contraire au vecteur $\vec{U}_1$ réduit ou agrandi en proportion de la demi-période image en moins ou en plus. Dans les deux cas, ce signal de sortie est fourni au circuit 331 de raffinement de recherche au demi-point d'image près.

Dans la deuxième branche comprenant les circuits 322 et 332, le processus est rigoureusement identique, les deux mêmes situations pouvant se présenter. Dans la première d'entre elles, le meilleur vecteur trame sélectionné pour la trame paire (le vecteur $\vec{U}_2$) a établi une correspondance entre trames paires (c'est-à-dire entre trames de même parité), et c'est lui qui reste sélectionné en tant que meilleur vecteur image éventuel. Le circuit 322 n'effectue alors aucun traitement. Si au contraire, dans la deuxième situation, le meilleur vecteur trame $\vec{U}_2$ a établi une correspondance entre la trame paire de l'image courante et la trame impaire de l'image précédente (c'est-à-dire entre des trames de parité opposée), le décalage temporel d'une demi-période d'image doit ici aussi être pris en compte. C'est ce qu'effectue le circuit 322, qui, par une règle de trois, réévalue dans le sens d'une diminution le meilleur vecteur trame $\vec{U}_2$. dans le cas d'une prédiction vers l'avant. Dans le cas d'une prédiction vers l'arrière, s'il y a correspondance entre la trame paire de l'image courante et la trame impaire de l'image suivante, la réévaluation par le circuit 322 est au contraire effectuée dans le sens d'une augmentation. Selon la situation considérée, et comme dans la première branche, le signal S(.) de sortie du circuit 322 correspond au vecteur $\vec{U}_2$ inchangé ou au contraire au vecteur $\vec{U}_2$ agrandi ou réduit en proportion de la demi-période image en plus ou en moins. Dans les deux cas, ce signal de sortie est fourni au circuit 332 de raffinement de recherche au demi-point d'image près.

Enfin, comme précédemment, le circuit d'estimation comprend un circuit de décision 350, recevant cette fois en parallèle les quatre sorties des circuits 331, 332. 230 et 240 de raffinement de recherche au demi-point d'image près. Ce circuit 350, de structure tout à fait identique à celle du circuit 250, permet, toujours en utilisant le critère de distorsion minimale, de sélectionner, entre les deux signaux de sortie des circuits 331 et 332, celui qui correspond au meilleur vecteur image, puis, entre celui-ci et les deux signaux de sortie des circuits 230 et 240, celui qui est, là aussi, le meilleur, c'est-à-dire celui pour lequel la somme des différences entre luminances est, par bloc (macrobloc), la plus faible. Si, lors de la prise en compte du décalage temporel d'une demi-période d'image par application d'une règle de trois, l'un des vecteurs trame sort de la plage de recherche, il est aussitôt exclu de ceux sur lesquels est effectuée la sélection réalisée par le circuit de décision 350. Dans tous les cas, c'est ici la parité de la composante verticale du vecteur de mouvement déterminé pour chacun des cicuits 210 et 220 qui détermine l'activation des circuits d'ajustement temporel ou au contraire l'absence de tout traitement de leur part.

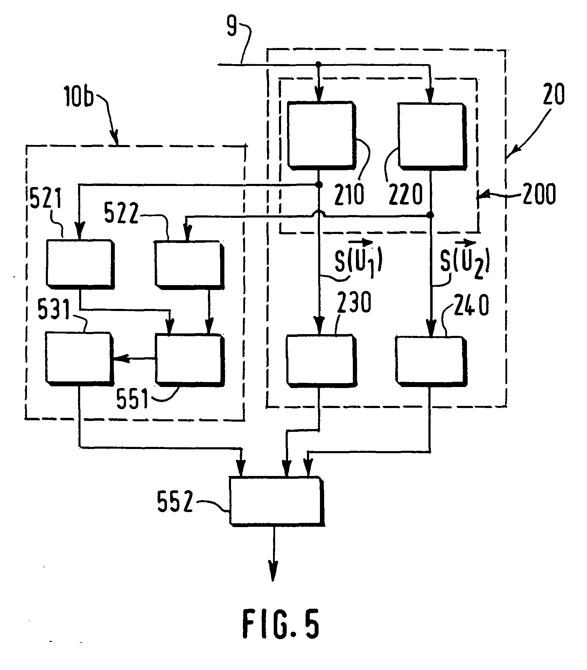

La présente invention n'est pas limitée, on l'a vu, à cet exemple de réalisation. En particulier, une nouvelle réduction du coût du dispositif peut être obtenue en mettant en oeuvre la variante de réalisation représentée sur la figure 5.

Le circuit d'estimation de mouvement proposé sur cette figure comprend là encore, comme dans la réalisation des figures 3 et 4, la voie 20 de recherche des meilleurs vecteurs trame, dont la structure reste inchangée. La voie 10 de la figure 3, ou la voie 10a de la figure 4, est, elle, remplacée cette fois par une voie 10b de recherche du meilleur vecteur image, qui ne comprend plus qu'une seule branche, mais composée de la façon suivante.

Deux circuits d'ajustement temporel, 521 et 522 respectivement, sont encore prévus en parallèle, et reçoivent respectivement, comme c'était aussi le cas pour les circuits 321 et 322, la sortie d'un des sous-étages de recherche de vecteur trame 210 et 220. Les situations qui peuvent alors se présenter sont les mêmes que précédemment : selon que le meilleur vecteur trame $\vec{U}_1$ (respectivement $\vec{U}_2$) sélectionné pour la trame impaire (respectivement paire) a établi une correspondance entre trames impaires (respectivement paires) ou au contraire entre la trame courante impaire (respectivement paire) et la trame paire (respectivement impaire) de l'image précédente, c'est ce vecteur $\vec{U}_1$ (respectivement $\vec{U}_2$) qui reste sélectionné comme meilleur vecteur image éventuel, les trames étant de même parité, et le circuit 521 (respectivement 522) n'effectue dans ce cas aucun traitement, ou bien au contraire le décalage temporel d'une demi-période d'images dû au fait que les trames sont de parité opposée doit être pris en compte, ce qu'effectue le circuit 521 (respectivement 522). Comme précédemment, cette opération de remise à l'échelle consiste en une règle de trois qui permet de réévaluer dans le sens d'une augmentation ou dans celui d'une diminution le meilleur vecteur trame $\vec{U}_1$ (respectivement $\vec{U}_2$).

Contrairement au mode de réalisation précédent, qui comprenait un unique circuit de décision, une première sélection est immédiatement faite en sortie de ces circuits 521 et 522, à l'aide d'un premier circuit de sélection 551 qui reçoit en parallèle les deux signaux de sortie desdits circuits d'ajustement temporel et sélectionne celui de ces deux signaux S(.) auquel correspond le meilleur vecteur image. Cette première sélection peut être effectuée comme précédemment selon le même critère de distorsion minimale. On peut aussi considérer qu'il est coûteux de recalculer a posteriori des distorsions déjà évaluées dans les sous-étages 210 et 220. Il est alors possible de choisir un critère plus approximatif (mais cependant suffisamment efficace) qui consiste à sélectionner le signal de sortie $S(U_i)$ correspondant au vecteur $U_i$ dont la distorsion déjà calculée dans le sous-étage 210 ou 220 a la plus faible valeur. La sortie du premier circuit de sélection est envoyée ver un circuit 531 de raffinement de recherche au demi-point d'image près (identique aux précédents). Un deuxième circuit de sélection 552 reçoit alors en parallèle les trois sorties des circuits 531, 230 et 240, et sélectionne celle à laquelle correspond le meilleur vecteur, selon ledit critère déjà adopté. Là encore, tout vecteur sortant de la plage de recherche après prise en compte d'un éventuel décalage temporel est exclu de ceux sur lesquels est effectuée la sélection.

A travers les exemples de réalisation de circuits d'estimation de mouvement qui ont été précédemment décrits et qui viennent d'être appliqués à la réalisation d'un dispositif de codage compatible avec le standard MPEG-2, le principe de l'invention se dégage clairement, à savoir économiser certaines des étapes les plus coûteuses du procédé d'estimation de mouvement.

On sait en effet que, selon l'état de la technique précédemment décrit, l'estimation de mouvement entre des images à trames entrelacées (ces images étant divisées en blocs de points d'image) comprend en fait deux estimations en parallèle, entre lesquelles une sélection est alors faite pour l'obtention du meilleur vecteur de mouvement. La première de ces estimations consiste en une étape dite de recherche du vecteur de mouvement le plus représentatif du mouvement entre deux images (ou meilleur vecteur image), et la seconde en une étape dite de recherche du vecteur de mouvement le plus représentatif du mouvement entre deux trames (ou meilleur vecteur trame), elle-même subdivisée en deux sous-étapes en parallèle comprenant chacune une première opération de recherche de vecteur trame par corrélation de bloc suivie d'une deuxième opération de raffinement, au demi-point d'image près, de cette recherche de vecteur trame.

Le procédé selon l'invention prévoit de réaliser ces deux étapes d'estimation non plus en parallèle, avec mise en oeuvre de façon autonome, mais en faisant dépendre la première de la seconde : à cet effet l'étape de recherche du meilleur vecteur image est maintenant effectuée à la suite des opérations de recherche de vecteur trame et comprend alors en cascade des sous-étapes d'ajustement temporel d'une demi-période d'image à partir de chaque meilleur vecteur trame après corrélation de bloc, de raffinement de recherche au demi-point d'image près, et de décision pour une sélection du meilleur vecteur de mouvement suivant un critère déterminé. Dans le circuit de mise en oeuvre du procédé, qui dispose de moyens de recherche d'une part du meilleur vecteur image et d'autre part du meilleur vecteur trame (pour ce dernier, par corrélation de bloc puis raffinement de recherche au demi-point d'image près) il est alors prévu que lesdits moyens de recherche du meilleur vecteur image soient en série avec lesdits moyens de recherche de vecteur trame par corrélation de bloc et comprennent eux-mêmes des moyens d'ajustement temporel d'une demi-période d'image à partir de chaque vecteur trame obtenu par corrélation de bloc, des moyens de raffinement de recherche au demi-point d'image près, et des moyens de décision, pour la sélection du meilleur vecteur de mouvement suivant un critère déterminé. Ce processus modifié permet d'obtenir un vecteur de mouvement qui n'est plus qu'une approximation par rapport au vecteur obtenu selon le processus en parallèle, mais les essais réalisés montrent que cette approximation reste tout à fait satisfaisante.

Dans l'étape de recherche du meilleur vecteur image ainsi modifiée, les sous-étapes d'ajustement temporel, qui consistent en deux opérations en parallèle d'ajustement temporel éventuel d'une demi-période d'image prévues en cascade avec lesdites deux opérations de recherche de vecteur trame par corrélation de bloc, sont alors suivies de sous-étapes qui peuvent être mises en oeuvre de façon différente, par exemple :

(a) soit la sous-étape de raffinement de recherche comprend deux autres opérations de raffinement de recherche au demi-point d'image près prévues respectivement en cascade avec les deux opérations d'ajustement temporel, et la sous-étape de décision comprend alors, en cascade avec les quatre opérations de raffinement de recherche ainsi définies, une opération unique de sélection du meilleur vecteur de mouvement à partir des quatre résultats desdites opérations de raffinement de recherche ;

(b) soit la sous-étape de raffinement de recherche ne comprend qu'une troisième opération de raffinement de recherche au demi-point d'image près, postérieure auxdites deux opérations d'ajustement temporel, la sous-étape de décision comprenant alors une première opération de sélection entre deux vecteurs de mouvement, prévue en cascade entre lesdites deux opérations d'ajustement temporel et ladite troisième opération de raffinement de recherche, et une deuxième opération de sélection entre trois vecteurs de mouvement, prévue en sortie des trois opérations de raffinement de recherche au demi-point d'image près.

Dans le premier cas, la simplification du procédé est déjà notable puisqu'une étape d'estimation autonome, celle mise en oeuvre par l'étage 100 dans l'exemple connu de la figure 3, est supprimée par rapport aux mises en oeuvre antérieures. Dans le second cas, la simplification est encore plus complète, puisqu'on a pu supprimer également une opération de raffinement de recherche de vecteur de mouvement au demi-point d'image près. Dans l'un et l'autre cas, le procédé se prête aussi bien aux mises en oeuvre décrites en rapport avec les figures 4 et 5 qu'à une mise en oeuvre partiellement ou totalement sous la forme de l'exécution d'une série d'instructions programmées, se déroulant, par exemple, comme on l'a dit, sous l'action et la supervision d'un microprocesseur ou d'un ordinateur.

**Revendications**

1. Procédé d'estimation de mouvement entre images à deux trames entrelacées divisées en blocs de points d'image, comprenant:

- une étape (20) de recherche des deux vecteurs de mouvement les plus représentatifsdu mouvement entre deux trames d'images consécutives, dits meilleurs vecteurs trame, cette étape (20) comprenant elle-même en série:

- une sous-étape (210, 220) de recherche des deux vecteurs trame par corrélation de bloc, et
- une sous-étape (230, 240) de raffinement de recherche au demi-point d'image près;

- une étape (10a, 10b) de recherche du vecteur de mouvement le plus représentatif du mouvement entre deux images consécutives mentionnées dit meilleur vecteur image, prévue à la suite de la sous-étape (210, 220) de recherche de l'étape (20) de recherche des deux vecteurs, de mouvement les plus représentatifs du mouvement entre deux trames, et comprenant successivement :

une sous-étape (321,322,521,522) d'ajustement temporel éventuel d'une demi-période d'image, à partir des deux vecteurs trame obtenus par corrélation de bloc, si le vecteur trame selectionné correspond aux trames de parité opposée, et sans ajustement temporel si ledit vecteur trame correspond aux trames de même parité, et
- une sous-étape (331,332,531) de raffinement de recherche au demi-point d'image près; et

- une étape (350, 552) de décision pour la sélection, parmi lesdits meilleurs vecteur image et vecteurs trames, du meilleur vecteur de mouvement suivant un critère prédéterminé, ladite étape (350, 552) de décision pour la sélection du meilleur vecteur de mouvement suivant un critère déterminé étant prévue à la sortie des sous-étapes (230, 240, 331, 332, 531) de raffinement de recherche au demi-point près ainsi définies,

2. Procédé d'estimation de mouvement selon la revendication 1, **caractérisé en ce qu'**il comprend, en sortie desdites sous-étapes d'ajustement temporel d'une demi-période d'image à partir de chaque vecteur trame prévues dans ladite étape dé recherche du vecteur de mouvement le plus représentatif du mouvement entre deux images, une opération préalable de sélection, selon le même critère prédéterminé, de celui des deux signaux auquel correspond le meilleur vecteur image, lesdites sous-étapes de raffinement de recherche au demi-point d'image près étant alors rassemblées en une seule opération de raffinement de recherche au demi-point d'image près prévue en sortie de ladite opération préalable de sélection.

3. Procédé d'estimation de mouvement selon l'une des revendications 1 et 2, **caractérisé en ce que** ledit critère prédéterminé est un critère de distorsion minimale.

4. Circuit d'estimation de mouvement entre images à deux trames entrelacées divisées en blocs de points d'image, comprenant:

    - des moyens (20) de recherche des deux vecteurs de mouvement les plus représentatifs du mouvement entre deux trames d'images consécutives, dits meilleurs vecteurs trame, cette étape (20) comprenant elle-même en série:

        - un étage (210, 220) de recherche des deux vecteurs trame par corrélation de bloc, et
        - un étage (230, 240) de raffinement de recherche su demi-point d'image près;

    - des moyens (10a, 10b) de recherche du vecteur de mouvement le plus représentatif du mouvement entre deux images consécutives, dit meilleur vecteur image, prévue à la suite de l'étage de recherche (210, 220) des moyens (20) de recherche des deux vecteurs de mouvement le plus représentatifs du mouvement entre deux trames, et comprenant en série:

        des moyens (321,322,521,522) d'ajustement temporel éventuel d'une demi-période d'image, à partir des deux vecteurs trame obtenus par corrélation de bloc, si le vecteur trame sélectionné correspond aux trames de parité opposée, et sans ajustement temporel si ledit vecteur trame correspond aux trames de même parité, et
        - des moyens (331,332,531) de raffinement de recherche au demi-point d'image près; et des moyens (350, 552) de décision, pour la sélection, parmi lesdits meilleurs vecteur image et vecteurs trames, du meilleur vecteur de mouvement suivant un critère prédéterminé, lesdites moyens (350, 552) de décision pour la sélection du meilleur vecteur de mouvement suivant un critère déterminé étant prévue à la sortie des moyens (230, 240, 331, 332, 531) de raffinement de recherche au demi-point près ainsi définie.

5. Circuit d'estimation de mouvement selon la revendication 4, **caractérisé en ce que** lesdits moyens de recherche du vecteur de mouvement le plus représentatif du mouvement entre deux images comprennent un étage de sélection préalable, pour la sélection, selon le même critère prédéterminé, de celui des deux signaux de sortie desdites moyens d'ajustement temporel auquel correspond le meilleur vecteur image, lesdits moyens de raffinement de recherche comprenant alors un seul étage do raffinement de recherche au demi-point d'image près prévu en sortie dudit étage de sélection préalable,

6. Dispositif de codage de signaux numériques représentatifs d'une séquence d'images divisées en blocs d'image composés chacun de points d'image, comprenant une première voie dite de codage et une deuxième voie dite de prédiction qui comprend elle-même notamment un étage d'estimation et de compensation de mouvement ainsi qu'un soustracteur inséré entre rentrée du dispositif de codage et la voie de codage et recevant sur son entrée négative la sortie dudit étage d'estimation et de compensation de mouvement, ledit dispositif de codage étant **caractérisé en ce que** ledit étage d'estimation et de compensation de mouvement comprend un circuit d'estimation de mouvement selon l'une des revendications 4 et 5.

## EP 0 675 652 B1

**Claims**

1. A method for estimating motion between images of two interleaved fields and divided into image point blocks, in which the method comprises:

   - a step (20) of determining the two motion vectors that are most representative of the motion between two fields of consecutive images, referred to as the best field vectors, wherein said step (20) includes, in series:

      - a sub-step (210, 220) of determining the two field vectors by block correlation, and
      - a sub-step (230, 240) of improving determination to within half an image point;

   - a step (10a, 10b) of determining the motion vector that is most representative of the motion between two consecutive images, referred to as the best image vector, provided at the output of said determination sub-step (210, 220) in step (20) of determining the two motion vectors that are most representative of the motion between two fields, wherein said step (10a, 10b) includes, in series:

      - a sub-step (321, 322, 521, 522) of optionally setting in time half an image period from the two field vectors obtained by block correlation if the selected field vector matches the fields of opposite parity, and without time setting if said field vector matches the fields of the same parity, and
      - a sub-step (331, 332, 531) of improving determination to within half an image point; and

   - a decision step (350, 552) for selecting, according to a predetermined criterion, the best motion vector among said best image vector and best field vectors, wherein said decision step (350, 552) for selecting the best motion vector according to a predetermined criterion is provided at the output of said sub-steps (230, 240, 331, 332, 531) of improving determination to within half an image point.

2. The method for estimating motion according to Claim 1, **characterised in that** it comprises, at the output of said sub-steps of setting in time half an image period from each field vector, provided in said step of determining the motion vector that is most representative of the motion between two images, a preliminary selection operation for selecting, according to the same predetermined criterion, the one of two signals that the best image vector matches, wherein said sub-steps of improving determination to within half an image point are then merged into a single operation of improving determination to within half an image point, provided at the output of said preliminary selection operation.

3. The method for estimating motion according to either of Claims 1 and 2, **characterised in that** said predetermined criterion is a criterion of minimum distortion.

4. A circuit for estimating motion between images consisting of two interleaved fields and divided into image point blocks, in which the circuit includes:

   - means (20) for determining the two motion vectors that are most representative of the motion between two consecutive image fields, referred to as the best field vectors, wherein said means (20) include, in series:

      - a stage (210, 220) for determining the two field vectors by block correlation, and
      - a stage (230, 240) for improving determination to within half an image point;

   - means (10a, 10b) for determining the motion vector that is most representative of the motion between two consecutive images, referred to as the best image vector, provided after the determination stage (210, 220) in the means (20) for determining the two motion vectors that are most representative of the motion between two fields, wherein said means (10a, 10b) include, in series:

      - means (321, 322, 521, 522) for optionally setting in time half an image period from the two field vectors obtained by block correlation if the selected field vector matches the fields of opposite parity, and without time setting if said field vector matches the fields of the same parity, and
      - means (321, 322, 531) for improving determination to within half an image point; and

   - decision means (350, 552) for selecting, according to a predetermined criterion, the best motion vector among said best image vector and best field vectors, wherein said decision means (350, 552) for selecting the best

9

motion vector according to a predetermined criterion are provided at the output of said means (230, 240, 331, 332, 531) for improving determination to within half an image point.

5. The circuit for estimating motion according to Claim 4, **characterised in that** said means for determining the motion vector that is most representative of the motion between two images include a preliminary selection stage for selecting, according to the same predetermined criterion, the one of two signals output from said time-setting means that the best image vector matches, wherein said determination-improving means then include a single stage for improving determination to within half an image point, provided at the output of said preliminary selection stage.

6. A device for coding digital signals that are representative of a sequence of images divided into image blocks consisting of image points, wherein the device includes a first path referred to as coding path and a second path referred to as predicting path including, in particular, a stage for estimating and compensating motion as well as a subtractor inserted between the input of the coding device and the coding path, and further receiving, at its negative input, the output of said stage for estimating and compensating motion, in which said coding device is **characterised in that** said stage for estimating and compensating motion includes a circuit for estimating motion according to either of Claims 4 and 5.

**Patentansprüche**

1. Verfahren zum Schätzen einer Bewegung zwischen Bildern mit zwei verschachtelten Halbbildern, die in Blöcke aus Bildpunkten unterteilt sind, das umfasst:

- einen Schritt (20) zum Suchen von zwei Bewegungsvektoren, die die Bewegung zwischen zwei Teilbildern aufeinander folgender Bilder am besten repräsentieren und beste Teilbildvektoren genannt werden, wobei dieser Schritt (20) seinerseits nacheinander umfasst:

- einen Unterschritt (210, 220) zum Suchen der zwei Teilbildvektoren durch Blockkorrelation und
- einen Unterschritt (230, 240) zum Verfeinern der Suche bis auf einen halben Bildpunkt;

- einen Schritt (10a, 10b) zum Suchen des Bewegungsvektors, der die Bewegung zwischen zwei erwähnten aufeinander folgenden Bildern am besten repräsentiert und bester Bildvektor genannt wird, der nach dem Such-Unterschritt (210, 220) des Schrittes (20) zum Suchen der zwei Bewegungsvektoren, die die Bewegung zwischen zwei Teilbildern am besten repräsentieren, vorgesehen ist und nacheinander umfasst:

- einen Unterschritt (321, 322, 521, 522) zum eventuellen zeitlichen Einstellen einer Bildhalbperiode ausgehend von den zwei durch Blockkorrelation erhaltenen Teilbildvektoren, falls der ausgewählte Teilbildvektor Teilbildern mit entgegengesetzter Parität entspricht, und ohne zeitliche Einstellung, falls dieser Teilbildvektor Teilbildern mit gleicher Parität entspricht, und
- einen Unterschritt (331, 332, 531) zum Verfeinern der Suche bis auf einen halben Bildpunkt; und
- einen Schritt (552, 350), um für die Auswahl unter den besten Bildvektoren und Teilbildvektoren eine Entscheidung über den besten Bewegungsvektor gemäß einem vorgegebenen Kriterium zu treffen, wobei der Entscheidungsschritt (350, 552) für die Auswahl des besten Bewegungsvektors gemäß einem vorgegebenen Kriterium am Ende der Unterschritte (230, 240, 331, 332, 531) zum Verfeinern der Suche bis auf einen halben Punkt wie oben definiert vorgesehen ist.

2. Bewegungsschätzverfahren nach Anspruch 1, **dadurch gekennzeichnet, dass** es am Ende der Unterschritte zum zeitlichen Einstellen einer Bildhalbperiode anhand jedes Teilbildvektors, die in dem Schritt zum Suchen des Bewegungsvektors, der die Bewegung zwischen zwei Bildern am besten repräsentiert, vorgesehen sind, eine vorhergehende Operation zum Auswählen gemäß demselben vorgegebenen Kriterium jenes Signals der zwei Signale, dem der beste Bildvektor entspricht, umfasst, wobei die Unterschritte zum Verfeinern der Suche bis auf einen halben Bildpunkt dann in eine einzige Operation zum Verfeinern der Suche bis auf einen halben Bildpunkt zusammengefasst werden, der am Ende der vorhergehenden Auswahloperation vorgesehen ist.

3. Bewegungsschätzverfahren nach einem der Ansprüche 1 und 2, **dadurch gekennzeichnet, dass** das vorgegebene Kriterium ein Kriterium der minimalen Verzerrung ist.

4. Schaltung zum Schätzen einer Bewegung zwischen Bildern mit zwei verschachtelten Teilbildern, die in Blöcke von Bildpunkten unterteilt sind, die umfasst:

- Mittel (20) zum Suchen der zwei Bewegungsvektoren, die die Bewegung zwischen zwei Teilbildern aufeinander folgender Bilder am besten repräsentieren und beste Teilbildvektoren genannt werden, wobei dieser Schritt (20) seinerseits nacheinander umfasst:

- eine Stufe (210, 220) zum Suchen von zwei Teilbildvektoren durch Blockkorrelation und
- eine Stufe (230, 240) zum Verfeinern der Suche bis auf einen halben Bildpunkt;

- Mittel (10a, 10b) zum Suchen des Bewegungsvektors, der die Bewegung zwischen zwei aufeinander folgenden Bildern am besten repräsentiert und bester Bildvektor genannt wird, die am Ausgang der Suchstufe (210, 220) der Mittel (20) zum Suchen der zwei Bewegungsvektoren, die die Bewegung zwischen zwei Teilbildern am besten repräsentieren, vorgesehen sind und nacheinander umfassen:

- Mittel (321, 322, 521, 522) zum eventuellen zeitlichen Einstellen einer Bildhalbperiode ausgehend von den zwei Teilbildvektoren, die durch Blockkorrelation erhalten werden, falls der ausgewählte Teilbildvektor zwei Teilbildern mit entgegengesetzter Parität entspricht, und ohne zeitliche Einstellung, falls dieser Teilbildvektor Teilbildern mit gleicher Parität entspricht, und
- Mittel (331, 332, 531) zum Verfeinern der Suche bis auf einen halben Bildpunkt; und
- Mittel (350, 552), um für die Auswahl unter den besten Bildvektoren und Teilbildvektoren eine Entscheidung über den besten Bewegungsvektor ge-mäß einem vorgegebenen Kriterium zu treffen, wobei die Entscheidungsmittel (350, 552) für die Auswahl des besten Bewegungsvektors gemäß einem vorgegebenen Kriterium am Ausgang der Mittel (230, 240, 331, 332, 531) zum Verfeinern der Suche bis auf einen halben Punkt wie oben definiert vorgesehen sind.

5. Bewegungsschätzschaltung nach Anspruch 4, **dadurch gekennzeichnet, dass** die Mittel zum Suchen des Bewegungsvektors, der die Bewegung zwischen zwei Bildern am besten repräsentiert, eine Stufe zum vorhergehenden Auswählen umfassen, um gemäß dem vorgegebenen Kriterium jenes der zwei Ausgangssignale der Mittel zum zeitlichen Einstellen auszuwählen, dem der beste Bildvektor entspricht, wobei die Mittel zum Verfeinern der Suche dann eine einzige Stufe zum Verfeinern der Suche bis auf einen halben Bildpunkt, die am Ausgang der Stufe zum vorhergehenden Auswählen vorgesehen ist, umfassen.

6. Vorrichtung zum Codieren digitaler Signale, die eine Folge von Bildern repräsentieren, die in Bildblöcke, die jeweils aus Bildpunkten aufgebaut sind, unterteilt sind, mit einem ersten so genannten Codierungsweg und einem zweiten so genannten Prädiktionsweg, der seinerseits insbesondere eine Stufe zum Schätzen und Kompensieren einer Bewegung sowie einen Subtrahierer, der zwischen den Eingang der Codierungsstufe und den Codierungsweg eingefügt ist und an seinem negativen Eingang den Ausgang der Stufe zum Schätzen und Kompensieren der Bewegung empfängt, umfasst, wobei die Codierungsvorrichtung **dadurch gekennzeichnet ist, dass** die Stufe zum Schätzen und Kompensieren der Bewegung eine Bewegungsschätzschaltung nach einem der Ansprüche 4 und 5 umfasst.

**FIG.1**

**FIG.2**

FIG.3

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0560577 A

**Littérature non-brevet citée dans la description**

- Adaptive frame/field motion compensated video coding. **DE A. PURI ; R. ARAVIND ; B. HASKELL.** Signal Processing. Association Européenne pour le Traitement du Signal (EURASIP), Février 1993, vol. 5, 39-58

- **DE J.R. JAIN ; A.K. JAIN.** Displacement measurement and its application in interframe image coding. *IEEE Transactions on Communications,* Décembre 1981, vol. COM-29 (12), 1799-1808
- *Signal Processing,* Février 1993